# EUROPEAN PATENT APPLICATION

(11) **EP 3 252 325 A1**
(43) Date of publication of application: **06.12.2017**
(21) Application number: 17172908.0
(22) Date of filing: 24.05.2017
(51) Int. Cl.: F16B 43/00, F16B 5/02

(54) **KIT WITH A STAINLESS-STEEL PART AND WITH A STAINLESS-STEEL SCREW FOR SCREWING DOWN AN ARTICLE**

(30) Priority: 30.05.2016 BE 201605398
(71) Applicant: Locinox, 8790 Waregem (BE)
(72) Inventor: TALPE, Joseph, 8551 Heestert-Zwevegem (BE)
(74) Representative: Gevers Patents

(57) **Abstract**

The invention provides a kit for screwing an article (1) to a support (2). The kit comprises at least one stainless-steel screw (3) having a conical head (9) provided to be screwed through a conical opening (11) provided in a stainless-steel part (10) of said article (1). The kit further comprises a plastic washer (4) provided for being arranged between the conical head (9) and the conical opening (11). By applying this washer (4), the conical head (9) no longer comes into direct contact with the conical opening (11) and cold welding is prevented without the screw (3) having to sacrifice on firmness.

## Description

The present invention relates to a kit with at least one article including a stainless-steel part and with at least one stainless-steel screw for screwing the article to a support. The stainless-steel screw has a conical head which is provided for being screwed down, through a conical opening provided in the stainless-steel part of said item, such that the conical head of the screw is recessed in said conical opening and presses against the stainless-steel part.

A known problem when screwing a stainless-steel screw into a stainless-steel part is cold welding. This phenomenon occurs when two similar materials are pressed against each other at high pressure, causing the materials to stick together. When screwing stainless-steel screws into a stainless-steel part, this causes the screw to lock, possibly even before the stainless-steel part is screwed down.

A number of solutions to this problem are already known in the prior art. A first solution is to use a different material to manufacture the screw than the article into which the screw is to be screwed. Usually, galvanised screws are used for this purpose. A disadvantage of this is that galvanised screws are less solid than stainless-steel screws, which results in a less firm attachment of the article to the support.

Another solution is to grease the screw and/or the article to reduce friction. For this purpose, 'Molylube' is often used, because ordinary oil does not reduce the friction sufficiently. Alternatively, products containing aluminium, silver or copper may also be used to grease the screw and/or article. The disadvantage of this is that such greases do not always work. Namely, if the pressure becomes too large, these substances cannot reduce the friction sufficiently and the screw will still block. Additionally, it takes time to grease the screw and/or article, and this should be done by a person skilled in the art who knows how much grease should be used. In addition, such greases are also not cheap. The presence of grease on the screws or on the article also ensures that the article can also be soiled on the visible parts with this grease during assembly.

Another way of preventing cold seal is to provide the screws with a coating during their manufacture. Such a process is described, for example, in EP 2 483 376 A1. The coating consists of a crystal structure with an area consisting mainly of salts that do not react with metal. The disadvantage of this is that such specially coated screws are not cheap.

A further solution is to manufacture the screws of special compounds as described in EP 1 678 338 A1. In this patent publication, a compound containing Ni, Cr, Sn, Bi, Mo, Fe, Si and Te and having a specific matrix structure is manufactured. The disadvantage of this is that such specially manufactured screws are not cheap.

It is an object of the present invention to provide a kit for simply screwing an article to a support, preventing cold welds without the screws having to be specially treated and without having to sacrifice on firmness.

According to the invention, this object is realised because the kit further includes a washer made of plastic, which is adapted to being arranged between said conical head and said conical opening, the washer having a substantially uniform thickness and being provided for substantially uniformly supporting the conical head in said conical opening.

Since the washer is located between the conical head and the conical opening and is made of plastic, there is no direct contact between the conical head and the conical opening, so that cold welding cannot occur. Furthermore, the screw is made of stainless-steel and is therefore very sturdy. Fitting a washer is not time consuming and does not have to be done by a specialised professional. The plastic washer can also be made very thin and does not have to be sturdy so that it is cheap to produce.

The use of plastic to prevent cold welding is already known for connecting pipes to each other or to valves. The plastic in this context is then a thin teflon tape that must be wound around the threaded joint. In the case of the present invention, however, the cold-welding problem that occurs between the head of the screw and the conical opening in the stainless-steel part must be solved, which is not possible by winding a teflon tape around the screw thread itself.

In a preferred embodiment of the kit according to the present invention, said washer is flexible and flat and adapted to conform to the shape of said conical opening and said conical head.

Because the washer adapts to the precise shape of the conical head and conical opening, small imperfections on the surfaces of the conical head or conical opening are counterbalanced. In addition, this washer can also be manufactured simply and cheaply from a flat foil.

In a further preferred embodiment of the kit according to the present invention, the washer is thus made of a plastic film. Preferably, this plastic film will have a tensile strength which, measured in accordance with EN 12311-1, is at least 10, preferably at least 50, and more preferably at least 75 N/50 mm in all directions.

In an alternative embodiment of the present invention, the washer will have a conical shape that is substantially the same as the shape of said conical head.

In this alternative embodiment, it is not necessary to make the washer from a sufficiently flexible plastic, as a rigid plastic can be used since the shape of the washer is already adapted to the conical head and the conical opening.

In an embodiment of the present invention, the washer will be made of a thermoplastic plastic, especially from a thermoplastic plastic film.

This material is easy to use, can easily be given the right shape, and is also easy to obtain. In particular, a plastic film allows a thin washer to be manufactured, so that any adjustments of the conical opening for a thicker washer are not necessary.

In an embodiment of the present invention, the washer is transparent.

Thus, the washer is not visible after use of the kit, even if a small part of the washer should protrude beyond the head of the screw.

The invention further relates to the use of the plastic washer in the kit according to the invention for preventing cold welding between the conical head of said screw and the conical opening in the stainless-steel part of the article when screwing down this article by means of said screw.

Finally, the invention also relates to the use of a kit according to the invention in which said article is attached to a support by screwing said screw through said conical opening into an opening provided in said support for this purpose, the conical head being recessed in the conical opening and said washer being clamped between the conical head and the conical opening.

The invention will hereafter be explained in further detail by way of the following description and the accompanying drawings.
Figure 1 shows an exploded view of a striker plate to be attached to a post.
Figure 2 shows a cross section of the striker plate shown in Figure 1 mounted on the post.

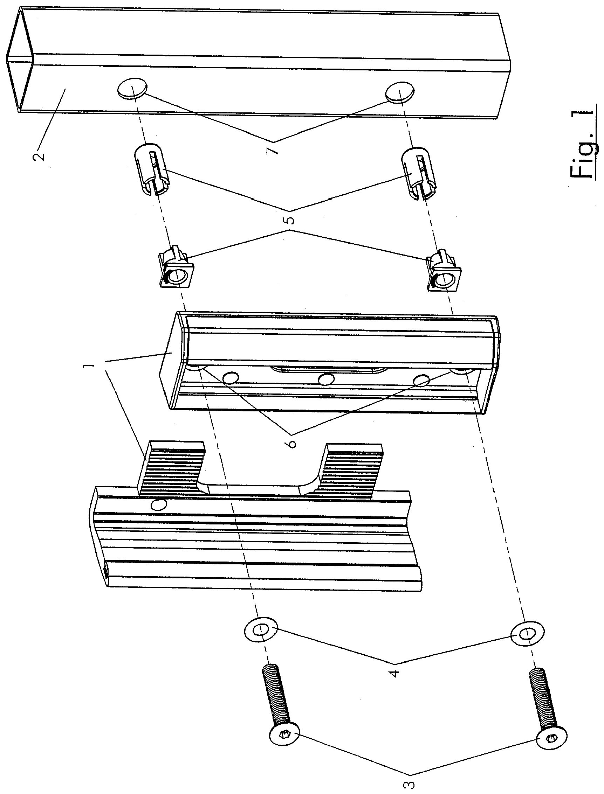

Figure 1 illustrates how a striker plate 1 is mounted on a post 2 using two stainless-steel screws 3, two plastic washers 4, and two plug mechanisms 5, which are secured through openings 7 in the post 2. The plug mechanism 5 used is already described in EP 1 907 712 B1, incorporated herein by way of reference as to the part relating to the operation of the plug mechanism 5. It will be apparent to those skilled in the art that the plug mechanism 5 used can also be replaced by other mechanisms, such as, for example, a nut that can be inserted into the post 2 via the other side of the post 2. It will also be apparent to a person skilled in the art that the post 2 can be replaced by a wall or other support depending on the situation. Articles other than a striker plate 1 can also be attached to the post 2 by means of screws 3, washers 4, and plug mechanisms 5.

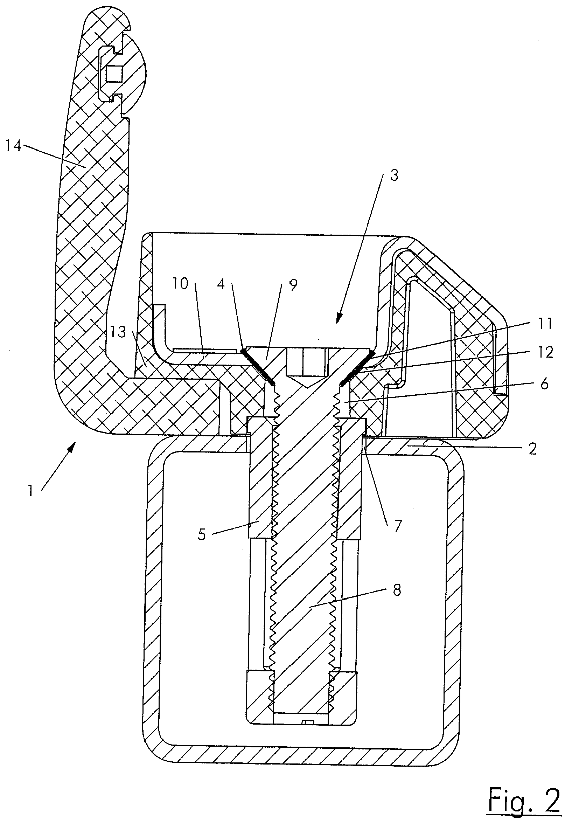

Figure 2 shows a cross section of the striker plate 1, which is attached to the post 2, at the height of the screw 3 and the plug mechanism 5. The screw 3 has an elongated body 8 and a conical head 9. The elongate body 8 is slid through the striker plate 1 through a hole 6 and is screwed into the plug mechanism 5. The striker plate 1 comprises a number of parts of which the most relevant to the present invention is the stainless-steel plate 10. This plate 10 forms the front of the striker plate 1 and is provided with conical recesses 11 in which the conical heads 9 of the screws 3 are countersunk. The striker plate 1 further comprises a plastic part 13 and a striker 14. The plastic part 13 is provided to support the stainless-steel plate 10 and to keep it at a distance from the post 2 to accommodate a cavity (not shown) provided in the striker plate 1 for the deadbolt of a lock (not shown) that interacts with the striker plate 1. The striker 14 is provided for serving as a striker for a gate or door on which or in which a lock is present which interacts with the striker plate 1.

In the embodiment according to Figure 2, the conical head 9 is thicker than the plate 10 and thus partially extends through this plate 10. Therefore, a conical recess 12 is also provided in the plastic part 13 of the striker plate 1. Although this is not necessary for the invention, it is advantageous to have as large a contact surface as possible between the conical head 9 and the conical recesses 11, 12 so as to connect the post 2 and the striker plate 1 more securely. Alternatively, it is possible to make the stainless-steel plate 10 thicker than the conical head 9 although this would then increase the cost of the stainless-steel plate 10.

Figure 2 further shows that a plastic washer 4 is clamped between the conical head 9 and the conical recess 11. This washer 4 prevents cold welding while screwing down the screw (3) because as a result, the stainless-steel conical head 9 no longer comes into direct contact with the conical recess 11 in the stainless-steel plate 10. In addition, the washer 4 is also recessed in the plate 10, which, of course, results from the fact that the conical head 9 is recessed in the conical recess 11 in the plate 10. It is also clear that the washer ring 4 supports the conical head 9 evenly in the conical recesses 11, 12 because it has a uniform thickness. It will be apparent to a person skilled in the art that the washer 4 only needs to be located between the conical recess 11 and the conical head 9, as only here is there contact between two of the same materials, between which cold welding can occur.

In particular embodiments, the washer 4 is made of a thermoplastic plastic as this is an easy-to-use material. In particular, this plastic can be simply injection moulded or simply made as a foil, from which the washer 4 can then be punched and/or cut out. In particular, the washer 4 is transparent so that it is no longer visible in the mounted striker plate 1, for example, if part of the washer 4 extends beyond the conical head 9 of the screw 3, as is usually preferably the case.

In the embodiment shown in Figures 1 and 2, the washer 4 is a flat ring made of a flexible plastic. This allows the washer 4, when screwing the screw 3 into the plug mechanism 5, to adapt to the exact shape of the head 9 and the conical recesses 11, 12. This is advantageous, because as a result the washer 4 can easily withstand the high pressure exerted by the head 9 of the screw 3 on the plate 10. In addition, such a flexible washer 4 can easily counterbalance small imperfections on the conical head 9 or the conical recesses 11, 12.

In this embodiment, the washer 4 will preferably have a thickness between 0.05 mm and 0.5 mm, more preferably between 0.05 mm and 0.3 mm, and most preferably between 0.1 mm and 0.2 mm. In this manner, the washer 4 will simply fit between the conical head 9 and the conical recess 11 and there will be no need to adjust it to provide a thicker washer 4. Due to the small thickness of the washer 4, there is also no danger that the material of the washer 4 would be squeezed out because of the high pressure between the head 9 of the screw 3 and the conical recess 11 in the plate 10. In order to obtain this thickness simply, it is advantageous that the washer 4 is made of a plastic film, in particular a thermoplastic plastic film. This plastic film need only have a limited tensile strength since the plastic ring will be substantially subjected to compressive forces. Preferably, the plastic film will have a tensile strength which, measured in accordance with EN 12311-1, is at least 10, preferably at least 50, and more preferably at least 75 N/50 mm in all directions (i.e., both in the longitudinal direction and in the transverse direction).

In an alternative embodiment, the washer 4 will not be a flat ring, but will have a conical shape that is substantially the same as the shape of said conical head 9. In this alternative embodiment, it is therefore not necessary to make the washer 4 from a sufficiently flexible plastic, but a rigid plastic can also be used since the shape of the washer 4 is already adapted to the conical head 9 and the conical recesses 11, 12. Due to the greater hardness of this plastic, the washer 4 can also withstand the high pressure between the head 9 of the screw 3 and the conical recess 11 in the plate 10, despite its greater thickness. Preferably, the washer 4 in this alternative embodiment will have a thickness between 0.5 mm and 3 mm, more preferably between 1 mm and 2 mm, and most preferably substantially 1.5 mm. The conical recesses 11, 12 are of course also adapted to allow the conical head 9 and the washer 4 to be recessed.

Although aspects of the present invention have been described with respect to particular embodiments, it will be apparent to those skilled in the art that these aspects may also be practised in other forms.

## Claims

1. A kit with at least one article (1) including a stainless-steel part (10) and with at least one stainless-steel screw (3) having a conical head (9) provided to be screwed through a conical opening (11) provided in said stainless-steel part (10) of said article (1) such that the conical head (9) of the screw (3) is recessed in said conical opening (11),
**characterised in that** the kit further includes a washer (4) made of plastic, which is adapted to being arranged between said conical head (9) and said conical opening (11), the washer (4) having a substantially uniform thickness and being provided for substantially uniformly supporting the conical head (9) in said conical opening (11).

2. Kit according to claim 1, **characterised in that** said washer (4) is flexible and flat and adapted to conform to the shape of said conical opening (11) and said conical head (9).

3. Kit according to claim 2, **characterised in that** the washer (4) will preferably have a thickness between 0.05 mm and 0.5 mm, preferably between 0.05 mm and 0.3 mm, and more preferably between 0.1 mm and 0.2 mm.

4. Kit according to any of claims 1 to 3, **characterised in that** the washer (4) is made of a plastic film.

5. Kit according to claim 4, **characterised in that** said plastic film will have a tensile strength which, measured in accordance with EN 12311-1, is at least 10, preferably at least 50, and more preferably at least 75 N/50 mm in all directions.

6. Kit according to claim 1, **characterised in that**, the washer (4) will have a conical shape that is substantially the same as the shape of said conical head (9).

7. Kit according to claim 7, **characterised in that** the washer (4) will have a thickness between 0.5 mm and 3 mm, preferably between 1 mm and 2 mm, and more preferably substantially 1.5 mm.

8. Kit according to any of the preceding claims, **characterised in that** the washer (4) is made of a thermoplastic plastic.

9. Kit according to any of the preceding claims, **characterised in that** the washer (4) is transparent.

10. Use of the plastic washer (4) in the kit according to any of claims 1 to 9 for preventing cold welding between the conical head (9) of said screw (3) and the conical opening (11) in the stainless-steel part (10) of the article (1) when screwing down this article (1) by means of said screw (3).

11. Use of a kit according to any of the preceding claims in which said article (1) is attached to a support (2) by screwing said screw (3) through said conical opening (11) into an opening (7) provided in said support (2) for this purpose, the conical head (9) being recessed in the conical opening (11) and said washer (4) being clamped between the conical head (9) and the conical opening (11).
